(19) Europäisches Patentamt
European Patent Office
Office européen des brevets

(11) Publication number: **0 356 963 A2**

# (12) EUROPEAN PATENT APPLICATION

(21) Application number: 89115845.3

(22) Date of filing: 28.08.89

(51) Int. Cl.5: C07F 7/00 , C08G 77/14 , C08G 77/38

(30) Priority: 29.08.88 JP 214347/88

(43) Date of publication of application: 07.03.90 Bulletin 90/10

(84) Designated Contracting States: DE FR GB

(71) Applicant: Shin-Etsu Chemical Co., Ltd.
6-1, Otemachi 2-chome
Chiyoda-ku Tokyo 100(JP)

(72) Inventor: Ichinohe, Shoji
4-2-32, Isobe
Annaka-shi Gunma-ken(JP)

(74) Representative: Struif, Bernward, Dipl.-Chem. Dr. et al
Patentanwaltsbüro Tiedtke, Bühling, Kinne Grupe, Pellmann, Grams, Struif, Roth
Bavariaring 4
D-8000 München 2(DE)

## (54) Novel siloxane compounds terminated with a diol at one end thereof.

(57) Novel siloxane compounds terminated with a diol at one end of the molecule are provided. The compounds are of the following formula

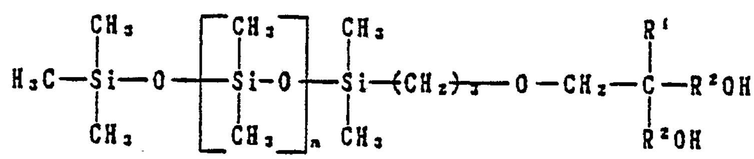

wherein $R^1$ represents a lower alkyl group, each $R^2$ represents a lower alkylene group and n is an integer of from 0 to 1000.

EP 0 356 963 A2

# NOVEL SILOXANE COMPOUNDS TERMINATED WITH A DIOL AT ONE END THEREOF

## BACKGROUND OF THE INVENTION

### Field of the invention

This invention relates to novel siloxane compounds which are terminated with a diol at one end thereof.

### Description of the Prior Art

Japanese Laid-open Patent Application No. 62-195389 describes diol-terminated siloxane compounds of the following formula which have two alcoholic hydroxyl groups at one end

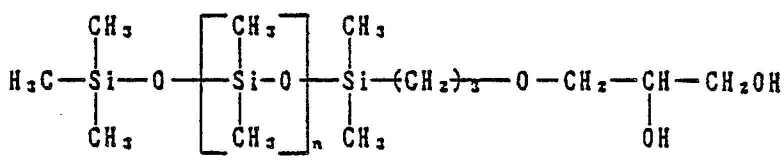

wherein n is an integer of from 0 to 4,000.

The diol-terminated siloxane compounds described in the above Laid-open Application have two hydroxyl groups at one end, of which one group is a primary hydroxyl group and the other is a secondary hydroxyl group. Accordingly, these two hydroxyl groups have different reactivities from each other. The secondary hydroxyl group reacts with a carboxyl group only under high temperature conditions and has very low reactivity with an isocyanate group. When the siloxane compound is used, for example, for alternating copolymerization with dicarboxylic acids or diisocyanate compounds to prepare polyurethanes or polyesters, a difficulty is involved in obtaining uniformly alternating copolymers.

## SUMMARY OF THE INVENTION

It is an object of the invention to provide novel diol-terminated siloxane compounds having at one end thereof two primary hydroxyl groups whose reactivities are equal to each other.

It is another object of the invention to provide novel siloxane compounds terminated at one end with two hydroxyl groups which have equally high reactivity with isocyanate and carboxyl groups whereby uniform alternating copolymers with diisocyanate compounds or dicarboxylic acid compounds can be readily obtained.

It is a further object of the invention to provide novel diol-terminated siloxane compounds which are useful for providing polyurethanes or polyesters introduced with dimethylpolysiloxane groups as side chains whereby the polymers have good surface characteristics such as water repellency, wear resistance and lubricity.

The above objects can be achieved, according to the invention, by a diol-terminated siloxane compound at one end thereof which is of the following general formula (I)

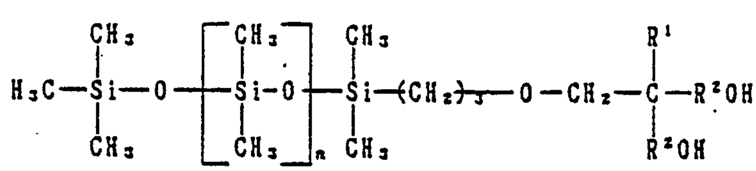

( I )

wherein $R^1$ represents a lower alkyl group, each $R^2$ represents a lower alkylene group and n is an integer of from 0 to 1000.

## DETAILED DESCRIPTION OF THE INVENTION

In the above formula (I), $R^1$ represents a lower alkyl group having from 1 to 6 carbon atoms. The lower alkyl group may include a lower cycloalkyl group. Specific examples of the lower alkyl group include a methyl group, an ethyl group, a propyl group, a butyl group, a pentyl group, a hexyl group, a cyclohexyl group and the like. Of these, a methyl, ethyl or propyl group is preferred. $R^2$ represents a lower alkylene group having from 1 to 6 carbon atoms. Such a lower alkylene group includes, for example, a methylene group, an ethylene group, a propylene group, a butylene group or the like. Preferably, a methylene, ethylene or propylene group is mentioned. n is an integer of from 0 to 1000, preferably from 0 to 200.

The siloxane compound of the invention can be prepared by the following process comprising steps (a) to (c).

In the step (a), a silylation compound of the following formula (II)

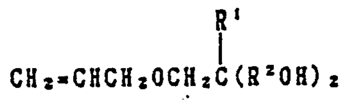

(II)

wherein $R^1$ and $R^2$ have, respectively, the same meanings as defined in the formula (I), and trimethylchlorosilane are reacted in the presence of a dehydrochlorination agent thereby obtaining a bis-silylated compound of the following formula (III)

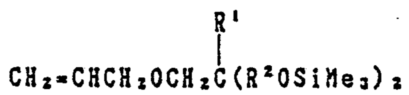

(III)

wherein $R^1$ and $R^2$ have, respectively, the same meanings as defined above, and Me represents a methyl group.

The dehydrochlorination agents used in the above reaction include, for example, tertiary amines such as triethylamine, pyridine, tributylamine, trimethylamine, tripropylamine, N,N-dimethylaniline, quinoline, piperidine, piperazine and the like. These compounds may be used singly or in combination. The amount of the dehydrochlorination agent is generally in the range of from 1 to 3 moles, preferably from 1 to 1.5 moles, per mole of the trimethylchlorosilane.

The reaction is usually carried out at a temperature of from 0 to 200 °C, preferably from 20 to 100 °C. The reaction is generally conducted in the presence of a catalyst such as chloroplatinic acid, platinum asbestos or the like.

In step (b), the bis-silylated product of the formula (III) obtained above and a siloxane compound of the following formula (IV) terminated with hydrogen at one end

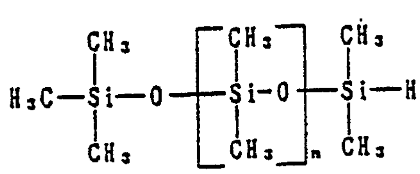

(IV)

wherein n has the same meaning as defined before, are subjected to addition reaction in the presence of a platinum catalyst to obtain a compound of the following formula (V)

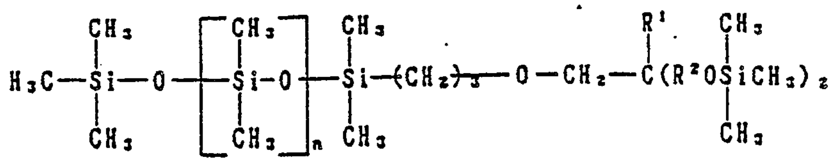

(V)

The platinum catalyst used in the above reaction includes, for example, chloroplatinic acid or its derivatives such as alcohol-modified chloroplatinic acid, platinum asbestos and the like. The reaction is effected in solvent. Useful solvents should be active hydrogen-free compounds and include, for example, aromatic hydrocarbons such as toluene, xylene and the like, aliphatic hydrocarbons such as hexane, octane and the like, esters, ketones, and chlorinated hydrocarbons such as chloroform, carbon tetrachloride and the like.

The ratio between the bis-silylated product of the formula (III) and the hydrogen-terminated siloxane at one end is generally such that the bis-silylated product is from 1 to 1.5 times by equivalent, preferably 1.1 times by equivalent, the siloxane terminated with hydrogen at one end.

The hydrogen-terminated siloxane of the formula (IV) used in the above reaction is prepared, for example, by a procedure wherein hexamethylcyclotrisiloxane obtained by a known process using a trimethylsilanol terminator is subjected to ring-open polymerization to obtain a siloxane terminated with a hydroxyl group at one end. This terminated siloxane is subjected to dehydrochlorination reaction at a temperature of from 20 to 100 °C by the use of a tertiary amine, such as triethylamine, as a hydrochloric acid collector. As a result, the siloxane of the formula (IV) is obtained.

In step (c), the compound of the formula (V) obtained above is de-silylated, thereby obtaining the siloxane compound of the general formula (1) according to the invention. The de-silylation reaction is generally carried out by adding a great excess of methanol to the compound of the formula (V) and heating the mixture at a refluxing temperature.

The resultant siloxane compound of the invention has usually a number average molecular weight of not larger than about 20,000. Specific and preferable examples of the siloxane compounds are those described in examples appearing hereinafter.

When the siloxane compound of the invention is employed as a co-monomer for the preparation of polymers such as, for example, polyurethanes, polyesters and the like, the resultant polymers have polydimethylsiloxane chains as side chains. Thus, the polymers exhibit good surface characteristics such as water repellency, wear resistance, lubricity and the like. Such polymers are useful particularly as heat-resistant coating materials for thermal transfer paper, synthetic leathers, fiber treating agents, surface modifiers for PET and urethane resins, and the like.

The present invention is more particularly described by way of examples.

Example 1

39.9g (0.12 moles) of 1,1-bis(trimethylsiloxymethyl)-1-allyloxymethylpropane was charged into a flask having an inner capacity of 200 ml, to which was added 0.04 ml of a solution obtained by dissolving 1g of chloroplatinic acid in 50 ml of isopropanol. Thereafter, 20.7g (0.14 moles) of pentamethyldisiloxane was dropped into the mixture at 80 °C. After completion of the dropping, the mixture was aged at 100 °C for 2 hours and the resultant reaction mixture was subjected to distillation to obtain 38 g of a fraction having a boiling point of 122 to 124 °C/$5 \times 10^{-3}$ mmHg at a yield of 65%.

The thus obtained fraction was subjected to measurements of $^1$H-NMR and IR spectra and also to mass spectrometry, with the following results.

$^1$H-NMR: $\delta$ (ppm), internal standard substance: benzene, solvent: $CDCl_2$
0.05(Si-$CH_3$,s,9H), 0.1(Si-$CH_3$,s,6H), 0.13(Si-$CH_3$,s,18H), 0.5(Si-$CH_2CH_2CH_2$,t,2H), 0.9($CH_3$,t,3H), 1.0 -1.6-($CH_2$,Si-$CH_2CH_2CH_2$,m,4H), 3.1($CH_2O$,s,2H), 3.2 -3.6($CH_2O$,$SiCH_2CH_2CH_2$,m,6H)
IR, $\nu_{max}$: 2960 $cm^{-1}$, 1260 $cm^{-1}$(Si-$CH_3$), 1120 - 1050 $cm^{-1}$(Si-O)
Mass spectrometry, m/e: 466

From the above results, the product obtained was confirmed to be a bis-silylated compound of the following formula

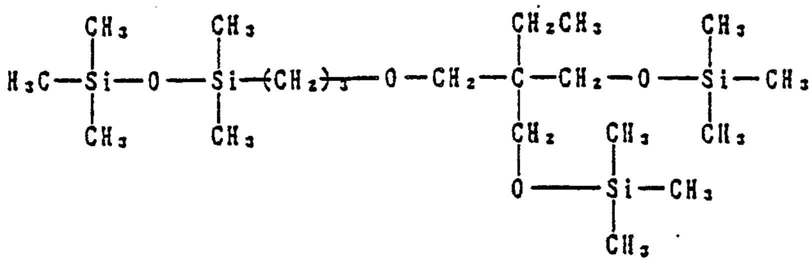

Thereafter, 38 g (0.08 moles) of the bis-silylated compound was charged into a flask along with 200 ml of methanol and heated under reflux for 2 hours. The resultant reaction mixture was distilled under reduced pressure to obtain 23 g of a fraction having a boiling point of 137 to 140 °C/5x$10^{-3}$ mmHg at a yield of 87%.

This fraction was subjected to measurements of $^1$H-NMR and IR spectra and also to mass spectrometry, with the following results.

$^1$H-NMR: $\delta$ (ppm), internal standard substance: benzene, solvent: $CDCl_2$
0.06(Si-$CH_3$,s,9H), 0.5(Si-$CH_2CH_2CH_2$,t,2H), 0.9($CH_3$,t,3H), 1.0 - 1.6($CH_2$,Si-$CH_2CH_2CH_2$,m,4H), 3.1-($CH_2O$,s,2H), 3,2 - 3.6($CH_2O$,Si$CH_2CH_2CH_2$,m,6H), 3.5 (-O-H,bs,2H)
IR, $\nu_{max}$: 3400 $cm^{-1}$(O-H), 2960 $cm^{-1}$(C-H), 1260 $cm^{-1}$(Si-$CH_3$), 1120 - 1050 $cm^{-1}$(Si-0)
Mass spectrometry, m/e: 322($M^+$)

From the above results, the product obtained was confirmed to be a siloxane compound terminated with a diol at one end, i.e. 1-[γ-(2′,2′-dihydroxymethylbutoxy)propyl]-1,1,3,3,3-pentamethyldisiloxane of the following formula

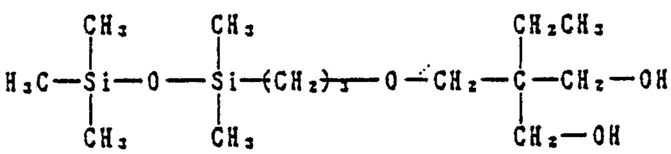

## Example 2

39.9g (0.125 moles) of 1,1-bis(trimethylsiloxymethyl)-1-allyloxymethylpropane, 222 g (0.1 mole) of hydrogen-terminated polysiloxane at one end of the following average formula, 262 g of toluene and 0.04 ml of a solution obtained by dissolving 1 g of chloroplatinic acid in 50 ml of isopropanol were charged into a flask with an inner capacity of one liter and heated under reflux at 115 °C for 5 hours

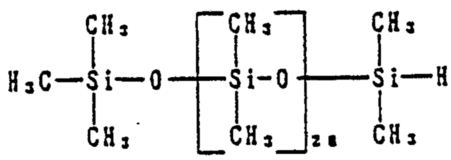

200 g of methanol was added to the resultant reaction mixture and the mixture was further heated under reflux at 90 °C for 5 hours, followed by washing the resultant reaction mixture three times with 200 g of a saturated Glauber's salt aqueous solution. Thereafter, the washed mixture was stripped under reduced pressure to obtain 211 g of an oily substance. The yield was 88%.

The oily substance was subjected to measurements of viscosity ($\eta^{25}$), specific gravity ($d^{25}$) and refractive index ($n_D^{25}$), and hydroxyl value, with the following results.

$\eta^{25}$: 87.4 centistokes
$d^{25}$: 0.972
$n_D^{25}$ : 1.4102
Hydroxyl value: 46 mg of KOH/g (from which the average molecular weight can be calculated as 2440).

The oily substance was also subjected to measurements of $^1$H-NMR and IR spectra and also to measurement of a molecular weight, calculated as polystyrene, with gel permeation chromatography (GPC). The results are shown below.

$^1$H-NMR: peaks appearing at the same chemical shifts as those for the siloxane compound obtained in Example 1.

IR, $\nu_{max}$: 3400 cm$^{-1}$(O-H), 2960 cm$^{-1}$ (C-H), 1260 cm$^{-1}$(Si-$CH_3$), 1120 - 1050 cm$^{-1}$(Si-O)

GPC: molecular weight calculated as polystyrene

$M_n$ = 3340

$M_w$ = 3860

Degree of polydispersion: $M_w/M_n$ = 1.16

From the above results, the thus obtained substance was found to be a diol-terminated siloxane of the following formula

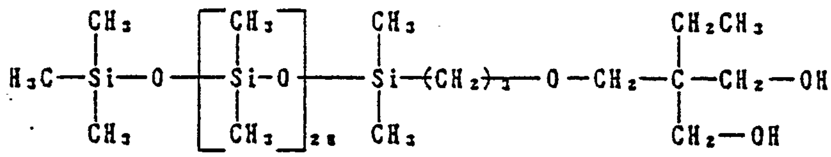

Novel siloxane compounds terminated with a diol at one end of the molecule are provided. The compounds are of the following formula

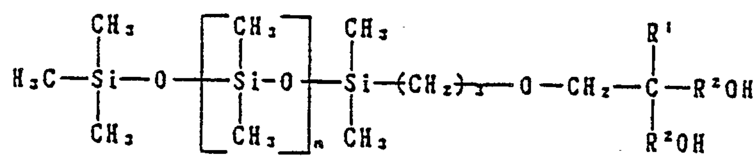

wherein $R^1$ represents a lower alkyl group, each $R^2$ represents a lower alkylene group and n is an integer of from 0 to 1000.

## Claims

1. A diol-terminated siloxane compound at one end thereof which is of the following general formula (I)

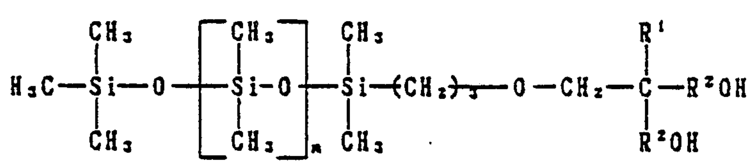

(I)

wherein $R^1$ represents a lower alkyl group, each $R^2$ represents a lower alkylene group and n is an integer of from 0 to 1000.

2. The siloxane compound according to Claim 1, wherein the lower alkyl group has from 1 to 6 carbon atoms.

3. The siloxane compound according to Claim 2, wherein the lower alkyl group is a methyl group, an ethyl group or a propyl group.

4. The siloxane compound according to Claim 1, wherein the lower alkylene group has from 1 to 6 carbon atoms.

5. The siloxane compound according to Claim 4, wherein the lower alkylene group is a methylene group, an ethylene group or a propylene group.

6. The siloxane compound according to Claim 1, wherein n is an integer of from 0 to 200.

7. The siloxane compound according to Claim 1, wherein said siloxane compound has two hydroxyl

groups at one end thereof.

8. The siloxane compound according to Claim 1, wherein said siloxane compound is of the formula

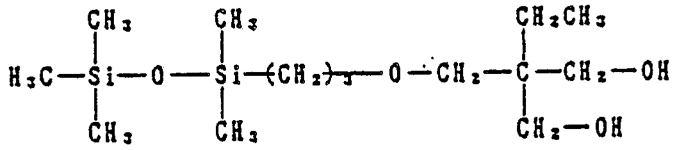

9. The siloxane compound according to Claim 1, wherein said siloxane compound is of the formula